# EUROPÄISCHE PATENTANMELDUNG

(11) **EP 2 306 035 A1**
(43) Veröffentlichungstag der Anmeldung: **06.04.2011**
(21) Anmeldenummer: 10180901.0
(22) Anmeldetag: 28.09.2010
(51) Int. Cl.: F16B 43/00, F21V 19/00, F21V 29/00

(54) **Befestigungselement für plattenförmige Bauteile aneinander, insbesondere für eine LED-Platine an einem Kühlkörper**

(30) Priorität: 30.09.2009 DE 102009043760
(71) Anmelder: Trilux GmbH & Co. KG, 59759 Arnsberg (DE)
(72) Erfinder: Drees, Frank, 58840, Plettenberg (DE)
(74) Vertreter: Lippert, Stachow & Partner

(57) **Zusammenfassung**

Die Erfindung betrifft ein Befestigungselement (10) zum flächigen Verbinden plattenförmiger Bauteile (1,2) aneinander, insbesondere von LED-Platinen auf Kühlkörpern. Es umfasst eine elastisch verformbare Basisplatte (11) mit zentraler Bohrung (18) zur Durchführung eines Befestigungsmittels (4), das zusammenwirkend mit einem der plattenförmigen Bauteile auf die Basisplatte (11) eine senkrecht gerichtete Kraft ausüben kann, durch welche die Basisplatte (11) elastisch verformt werden und auf das eine plattenförmige Bauteil Druck ausüben kann, wobei das Profil der Basisplatte (11) so gestaltet ist, dass sich infolge der elastischen Verformung die zu dem einen plattenförmigen Bauteil weisende untere Fläche (12) der Basisplatte (11) zumindest teilweise an die Oberfläche dieses Bauteils anlegen und bei einer vorgegebenen Anzugskraft des Befestigungsmittels einen gleichmäßig verteilten vorgegebenen Druck auf diese Fläche ausüben kann.

## Beschreibung

Die Erfindung betrifft ein Befestigungselement und ein Verfahren, um plattenförmige Bauteile, insbesondere eine LED-Platine und einen Kühlkörper an ihren Flächen miteinander zu verbinden.

Mit der Entwicklung der Technik zu Energie sparenden Leuchtmitteln werden zunehmend Licht emittierende Dioden (LED) eingesetzt. Obwohl diese eine hervorragende Lichtausbeute haben, fällt doch der größere Teil der verbrauchten Energie als Verlustleistung, das heißt Wärme, an. Diese Wärme muss abgeführt werden, da sich bei höheren Temperaturen Lichtausbeute und Lebensdauer der LED verschlechtern. Weil derzeit die Größe der einzelnen LED beschränkt ist, werden für stärkere Lichtquellen mehrere LED auf einer Platine angeordnet, die auch die Leiterbahnen für die Stromversorgung aufweisen kann. Zur Wärmeableitung wird eine solche Platine üblicherweise aus einem gut wärmeleitenden Material hergestellt und mit ihrer den LED gegenüberliegenden Fläche auf einen Kühlkörper aufgelegt, dessen Oberfläche, beispielsweise durch Rippen auf der der Platine abgewandten Seite, so vergrößert sein kann, dass er die Wärme rasch an die Umgebungsluft abgibt.

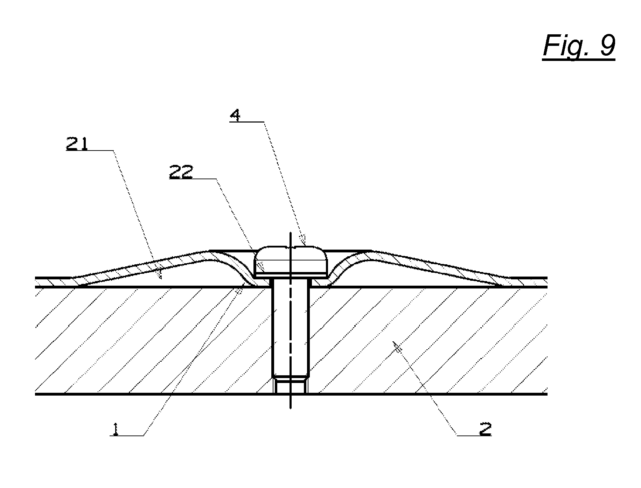

Die Verbindung der Platine mit dem Kühlkörper geschieht üblicherweise durch einen wärmeleitfähigen Klebstoff, Wärmeleitpaste oder durch Schrauben, welche Platine und Kühlkörper durchdringen und zusammenpressen. Die üblichen Kleber und Pasten haben den Nachteil, dass sich durch Alterung die Wärmeleitfähigkeit und die Festigkeit verschlechtern können. Auch kann sich die Klebeverbindung durch die thermischen Lastwechsel im Laufe der Zeit lösen. Des Weiteren ist das Klebeverfahren arbeitsaufwändig. Bei Schraubverbindungen hat sich gezeigt, dass der Wärmewiderstand sehr stark von der Breite des Spalts zwischen Platine und Kühlkörper abhängt. Diese wiederum hängt mit dem auf die Berührungsfläche einwirkenden Druck zusammen. Bei der üblichen Verbindung mittels Schrauben, Muttern und Unterlegscheiben ist die Verteilung des Drucks sehr ungleichmäßig. Während in der Nachbarschaft der Schraube unter der Unterlegscheibe ein sehr hoher Druck herrscht, ist dieser im übrigen Bereich der Platine, die gewöhnlich zur besseren Wärmeabfuhr möglichst dünn gehalten wird und daher nachgiebig ist, gering. Diese Situation lässt sich auch nicht durch stärkeres Anziehen der Schraube verbessern, weil dabei nur der Druck in unmittelbarer Nachbarschaft der Schraube steigt und die Unterlegscheiben und die Platine sich verformen, ohne dass im Randbereich der Unterlegscheibe der erforderliche Druck erreicht wird (siehe Figur 9). Es ist zwar möglich, den Wärmeübergang durch Einbringen einer Wärmeleitpaste in den Spalt zu verbessern. Dies ist jedoch mit ähnlichen Nachteilen verbunden wie das Kleben, etwa Alterung und Arbeitsaufwand.

Die Erfindung stellt sich daher die Aufgabe, ein Befestigungselement für plattenförmige Bauteile aneinander anzugeben, welches eine Verbindung dieser Bauteile mit möglichst geringem Wärmewiderstand ermöglicht.

Diese Aufgabe wird durch ein Befestigungselement nach dem Hauptanspruch gelöst.

Es wurde nämlich festgestellt, dass ein Befestigungselement mit einer Basisplatte aus einem elastisch verformbaren Material so gestaltet werden kann, dass nach dem Zusammenstecken des Befestigungsmittels mit dem Befestigungselement im spannungsfreien Zustand nur der Rand der Basisplatte auf der Platine aufliegt, während nach dem Anziehen die Basisplatte sich elastisch verformt, bei einer bestimmten Anzugskraft zumindest mit einem Teil der ganzen Fläche aufliegt und dabei einen gleichmäßigen Druck auf die Platine ausübt.

Unter Anzugskraft des Befestigungsmittels wird hierbei die auf das Befestigungselement wirkende Kraft verstanden, die gleich der vom Kühlkörper ausgeübten Reaktionskraft ist.

Der Erfindung liegt die Beobachtung zugrunde, dass der Wärmewiderstand an einer Kontaktfläche zwischen zwei plattenförmigen Bauteilen mit dem Berührungsdruck zunächst abnimmt, sich bei weiter steigendem Druck aber nicht mehr wesentlich verändert. Der für einen optimalen Wärmewiderstand erforderliche Mindestdruck hängt dabei unter anderem von der Oberflächenrauheit der sich berührenden Flächen und den Eigenschaften der Materialien, wie zum Beispiel deren Härte, ab. Bei den üblichen in der Praxis verwendeten Materialien, zum Beispiel mit einer Isolierschicht versehenem Aluminium, beträgt dieser Mindestdruck etwa 0,2 bis 0,4 MPa.

Das erfindungsgemäße Befestigungselement sorgt nun dafür, dass dieser Mindestdruck über einen möglichst großen Bereich der Kontaktfläche zwischen Platine und Kühlkörper erreicht wird. Dabei wird der Nachteil des Standes der Technik überwunden, bei dem durch eine ungleichmäßige Druckverteilung auf wesentlich kleinerer Fläche eine Verformung der Bauteile, insbesondere der Platine, mit Bildung eines Luftspalts von sehr hohem Wärmewiderstand auftritt.

Die Gestaltung des Profils lässt sich abhängig von den Eigenschaften des für das Befestigungselement verwendeten Materials, seinen Abmessungen, dem erforderlichen gleichmäßig verteilten Druck und der Anzugskraft des Befestigungsmittels mit der Methode der finiten Elemente berechnen.

Als Befestigungsmittel kann vorzugsweise mindestens eine Schraube dienen, welche die Platine durchdringt und entweder in ein Gewinde im Kühlkörper eingeschraubt oder diesen durchdringt und auf der von der Platine abgewandten Seite mit einer Mutter versehen ist. Der Schraubenkopf übt dabei die Anzugskraft auf das Befestigungselement aus. Die Schraube kann soweit angezogen werden, bis die erforderliche Anzugskraft für eine gleichmäßige Druckverteilung erreicht ist. Das Befestigungselement wirkt dann gleichzeitig als Schraubensicherung.

Andere Befestigungsmittel, beispielsweise Nieten, sind ebenfalls brauchbar, wenn mit ihnen eine vorgegebene Anzugskraft eingestellt werden kann.

Das erfindungsgemäße Befestigungselement ist vorzugsweise für die Verwendung mit LED-Platinen vorgesehen, die mehrere LED, meist in einem bestimmten Muster angeordnet, tragen. Die Befestigungselemente befinden sich naturgemäß auf der gleichen Seite der Platine, welche die LED trägt, und zwar in den Zwischenräumen zwischen diesen. Wegen der einfacheren Berechnung und Fertigung ist die Basisplatte des erfindungsgemäßen Befestigungselements vorzugsweise kreisrund gestaltet. Um einen möglichst guten Wärmeübergang zwischen Platine und Kühlkörper zu erreichen, sollte jedoch ein möglichst großer Anteil der Platinenoberfläche von Befestigungselementen bedeckt sein. Je nach der Anordnung der LED können auch andere Formen, beispielsweise Quadrate, Rechtecke, Sechsecke, Achtecke oder andere Vielecke vorteilhaft sein.

Es wurde ferner festgestellt, dass eine hinreichend gleichmäßige Druckverteilung erreicht werden kann, wenn die Basisplatte nicht vollflächig, sondern nur mit Rippen, die auf der unteren Fläche der Basisplatte konzentrisch umlaufend angebracht sind, auf die Platine drückt. Je nach der Größe der Basisplatte können dieses zwei oder mehrere Rippen sein. Zweckmäßig ist dabei die äußere Rippe am Rand der Basisplatte und die innere Rippe an oder nahe bei der Bohrung angebracht. Bei einer kreisrunden Basisplatte sind demnach die konzentrischen Rippen ebenfalls kreisförmig, während z.B. eine achteckige Basisplatte entsprechend auch achteckig umlaufende Rippen aufweist.

Wiederum ist die Höhe der Rippen so zu bemessen, dass im spannungsfreien Zustand nur die äußerste Rippe auf der Platine aufliegt, während bei der vorgegebenen Anzugskraft des Befestigungsmittels alle Rippen mit gleichem Druck auf die Platine einwirken. Die Abstände zwischen den Rippen sind nach den Festigkeitseigenschaften der Platine zu bemessen, so dass der Druck an der Kontaktfläche zwischen Platine und Kühlkörper im Zwischenraum der Rippen nicht zu gering ist.

Diese erfindungsgemäße Ausführungsform mit den Rippen an der Basisplatte hat unter anderem den Vorteil der Materialersparnis. Eine weitere Materialersparnis ergibt sich, wenn die Rippen mit Lücken versehen sind. Bevorzugt können die zwischen der äußeren und der inneren Rippe liegenden mittleren Rippen mit Lücken ausgebildet sein. Auch für die Größe dieser Lücken ist wie oben zu berücksichtigen, dass unter der Lücke der erforderliche Mindestdruck an der Kontaktfläche nicht unterschritten wird.

Bei einer besonders bevorzugten Ausführungsform des erfindungsgemäßen Befestigungselements sind in der Basisplatte und den mittleren Rippen radial zwischen der inneren und äußeren Rippe verlaufende Schlitze vorgesehen, die entsprechende radial verlaufende Stege begrenzen. Dabei ergeben sich naturgemäß die oben erwähnten Lücken in den mittleren Rippen. Für die Breite der Schlitze und damit der Lücken in den mittleren Rippen gelten ähnliche Überlegungen wie oben für die Abstände zwischen den Rippen angeführt, d. h. abhängig von der Nachgiebigkeit der Platine dürfen die Lücken nicht so groß sein, dass der Druck an der Kontaktfläche zwischen Platine und Kühlkörper den erforderlichen Mindestdruck im Bereich der Lücken unterschreitet. Diese Ausführungsform hat neben der Materialeinsparung den weiteren Vorteil, dass Luft an die Vorderseite der Platine im Bereich unter dem Befestigungselement zutreten und die Kühlung unterstützen kann.

Als Material für das erfindungsgemäße Befestigungselement eignet sich vorzugsweise ein Kunststoff, der eine hinreichende Festigkeit besitzt und elastisch verformbar ist, ohne dass er über längere Zeiträume plastisch fließt. Beispiele geeigneter Kunststoffe sind PA (Polyamid), PC (Polycarbonat), PBT (Polybutylenterephthalat), Polyoxymethylen, Polyetherketone, Polyetherimide etc. und deren Modifikationen, auch in glasfaserverstärkter Ausführung. Andererseits kann das Element aber auch aus einem geeigneten Metall, beispielsweise Edelstahl, Aluminium etc., hergestellt werden. Bei der Verwendung eines leitfähigen Materials, wie eines Metalls, muss durch geeignet angebrachte Isolierschichten dafür gesorgt werden, dass das Befestigungselement keinen Kurzschluss zwischen den Leiterbahnen auf der Oberfläche der Platine hervorrufen kann. Als Fertigungsverfahren kommen Spritzgießen, Stanzbiegen etc. in Betracht.

Die Ausführung der Erfindung gestaltet sich wie folgt: Zunächst wird an Hand der konkreten Ausgestaltung von LED-Platine und Kühlkörper die geometrische Gestalt des Befestigungselements, darunter Umrissform (Kreis, Quadrat usw.) und Größe der Basisplatte, gegebenenfalls Anzahl, Breite und Lücken der Rippen, sowie das Material festgelegt. Danach wird mittels der Methode der finiten Elemente unter Berücksichtigung der Eigenschaften des gewählten Materials und des erforderlichen Mindestdrucks das Profil des Befestigungselements und der für die Erreichung des Mindestdrucks erforderliche Zug an der Schraube berechnet. Nach der Bereitstellung der Befestigungselemente und Schrauben sowie der mit entsprechenden Bohrungen und gegebenenfalls Gewinde versehenen Bauteile Platine und Kühlkörper braucht nur noch die Schraube durch Befestigungselement und Platine hindurch gesteckt, in den Kühlkörper eingeschraubt und bis zur berechneten Anzugskraft angezogen zu werden. Eine gewisse Überschreitung dieser Zugkraft kann dabei vorteilhaft sein, um das Setzen der Schraubverbindung auszugleichen.

Mit dem erfindungsgemäßen Befestigungselement kann eine Verbindung zwischen LED-Platinen und Kühlkörper hergestellt werden, welche über den größten Teil der Berührungsfläche einen Kontakt mit optimalem Wärmewiderstand ermöglicht, der sich mit der Zeit nicht verschlechtert und so der langen Lebensdauer der LED angemessen ist. Die Verwendung des Befestigungselements ermöglicht durch Reduzierung der Arbeitsschritte eine rationelle Fertigung.

Die Erfindung wird nun anhand eines Ausführungsbeispiels näher erläutert, wobei auf die beigegebenen Zeichnungen Bezug genommen wird.

Es zeigen:
- Figur 1: ein erfindungsgemäßes Befestigungselement im Schnitt A-A (Figur 2),
- Figur 2: dieses Befestigungselement in Draufsicht,
- Figur 3: dieses Befestigungselement in Untersicht,
- Figur 4: eine mit LED bestückte und unter Verwendung der erfindungsgemäßen Befestigungselemente auf einem Kühlkörper montierte Platine in Draufsicht,
- Figur 5: ein erfindungsgemäßes Befestigungselement in Einbaulage vor dem Anziehen des Befestigungsmittels,
- Figur 6: dieses Befestigungselement nach dem Anziehen des Befestigungsmittels,
- Figur 7: die Druckverteilung auf der Platine bei Verwendung des erfindungsgemäßen Befestigungselements längs einer das Befestigungsmittel berührenden Ortsko- ordinate,
- Figur 8: ein erfindungsgemäßes Befestigungselement nach einer anderen bevorzugten Ausführungsform,
- Figur 9: eine Befestigung nach dem Stand der Technik mit Schraube und Unterlegscheibe.

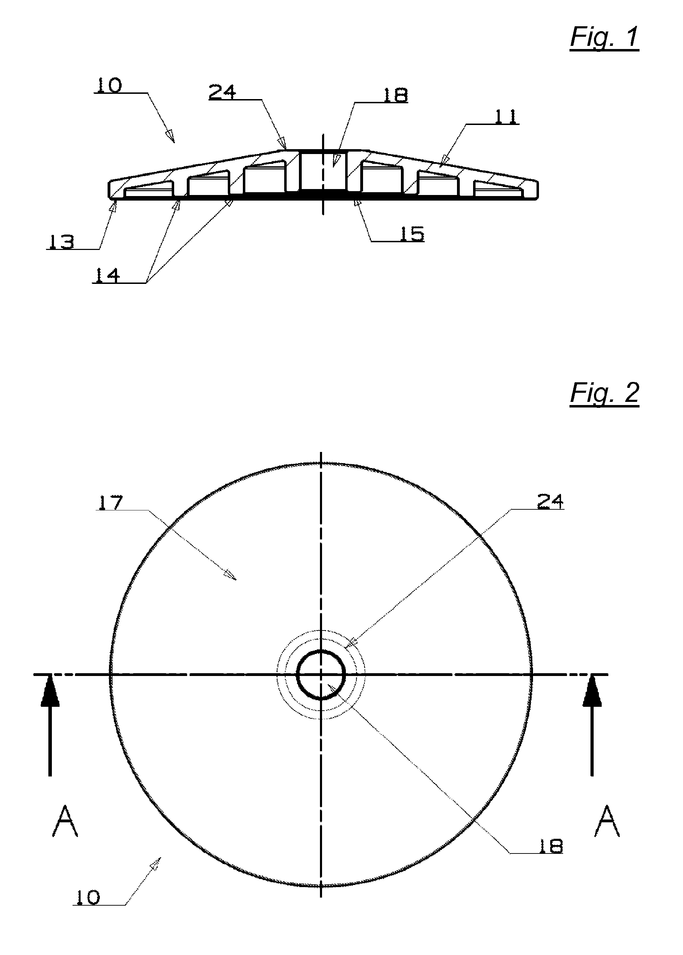

Figur 1 zeigt ein erfindungsgemäßes Befestigungselement 10 im Schnitt. Man erkennt die Basisplatte 11, die in dieser Ausführungsform etwa die Form eines flachen Kegelmantels mit einer an die Bohrung angrenzenden Schulter 24, auf der der Kopf des Befestigungsmittels ruhen kann, hat. In der Mitte weist das Befestigungselement eine Bohrung 18 auf. Auf der Unterseite 12 des Befestigungselements sind mehrere konzentrische Rippen ausgebildet, davon eine äußere Rippe 13, eine innere Rippe 15 und zwei mittlere Rippen 14.

In Figur 2 ist dieses Befestigungselement in Draufsicht zu sehen. Die Oberseite 17 der Basisplatte lässt auch hier die Bohrung 18 und die Schulter 24 erkennen.

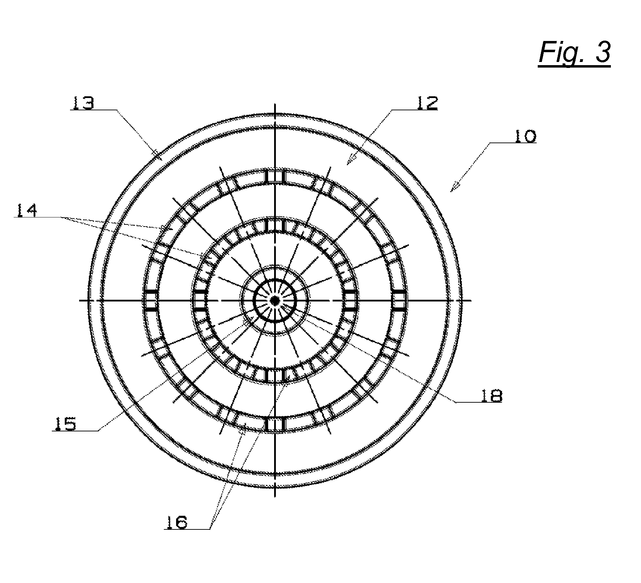

Figur 3 ist die Untersicht dieses Befestigungselements 10, in der die Rippenstruktur der Unterseite 12 gezeigt ist. Die mittleren Rippen 14 weisen Lücken 16 auf.

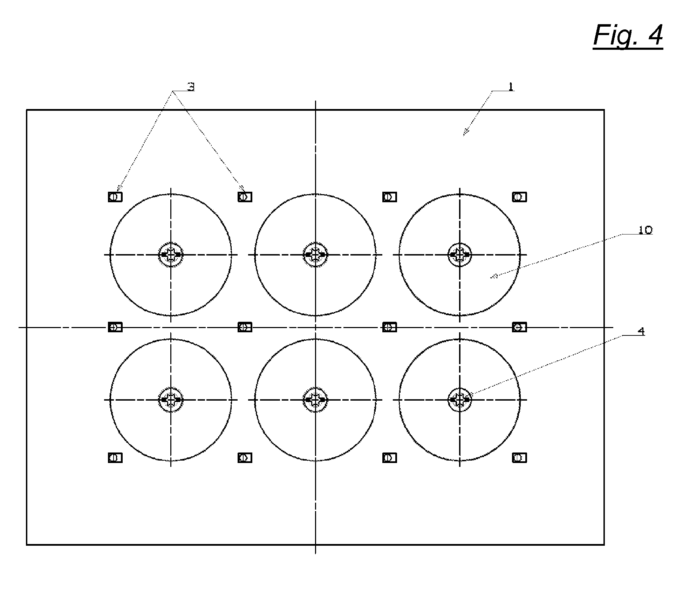

Figur 4 zeigt eine Platine mit 12 LED 3 in der Draufsicht, die mittels Schrauben 4 und der in den vorangehenden Figuren beschriebenen Befestigungselemente 10 an den in dieser Ansicht verdeckten Kühlkörper befestigt ist. Wie man sieht, wird der größere Anteil der Platinenfläche zwischen den LED durch die erfindungsgemäßen Befestigungselemente an den Kühlkörper gedrückt. Selbstverständlich können im äußeren Bereich dieser Platine weitere Schrauben und Befestigungselemente vorgesehen werden. Der Kühlkörper 2 kann auf der der Platine abgewandten Seite mit Mitteln zur Verbesserung des Wärmeaustausches mit der Umgebung, beispielsweise mit Rippen versehen sein oder auch Bohrungen zur Durchleitung eines fluiden Kühlmittels aufweisen.

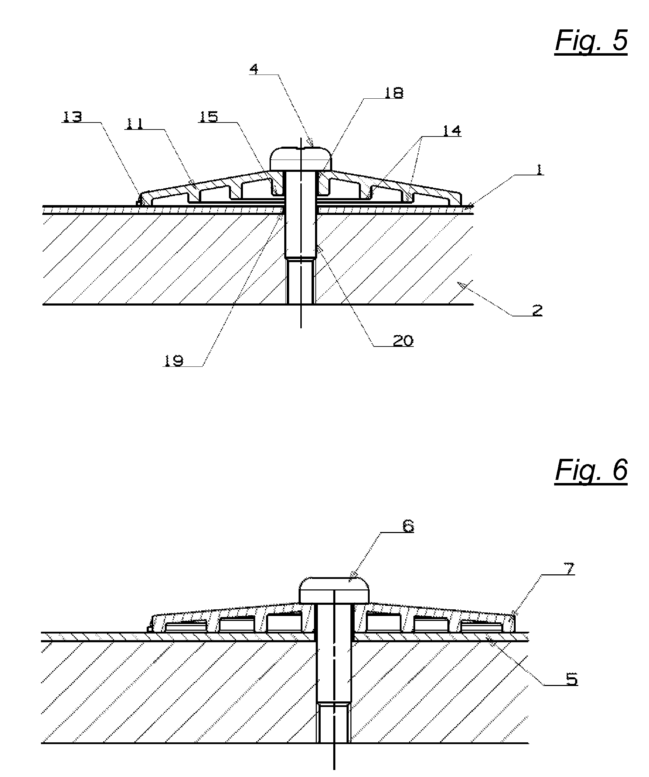

Figur 5 zeigt einen Schnitt durch das Befestigungselement der Figur 1 in der Einbaulage mit Platine 1, Kühlkörper 2 und Schraube 4, und zwar im spannungsfreien Zustand vor dem Anziehen der Schraube. Die Schraube durchsetzt die Bohrung 18 des Befestigungselements und die Bohrung 19 in der Platine und ist in das Gewinde in der Bohrung 20 des Kühlkörpers eingeschraubt. Anstelle des Gewindes im Kühlkörper kann selbstverständlich auch bei entsprechend längerer Schraube eine Mutter auf der der Platine abgewandten Seite des Kühlkörpers treten.

Figur 6 zeigt einen der Figur 5 entsprechenden Schnitt, jedoch ist hier die Schraube 4 so weit in den Kühlkörper 2 angeschraubt, dass der Schraubenkopf 6 die Basisplatte 11 niederdrückt und elastisch verformt, wobei die Rippen 13, 14, 15 auf der Oberseite 7 der Platine 1 aufliegen und diese mit gleichmäßigen Druck niederdrücken. Dieser Druck pflanzt sich durch die Platine 1 bis zur Kontaktfläche 5 zwischen Platine und Kühlkörper 2 fort.

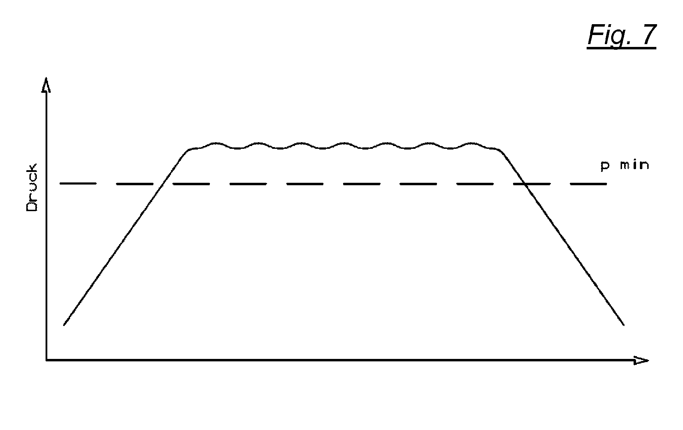

Die Verteilung dieses Drucks auf die Kontaktfläche 5 des Kühlkörpers 2 ist im Graphen der Figur 7 dargestellt. Im Bereich des Befestigungselements 10 herrscht ein weitgehend einheitlicher Druck, die den für optimalen Wärmewiderstand erforderlichen Mindestdruck Pₘᵢₙ leicht übersteigt, während außerhalb dieses Bereiches der Druck stark abfällt. Man sieht daran, dass im gesamten vom Befestigungselement abgedeckten Bereich ein optimaler Wärmewiderstand gewährleistet wird.

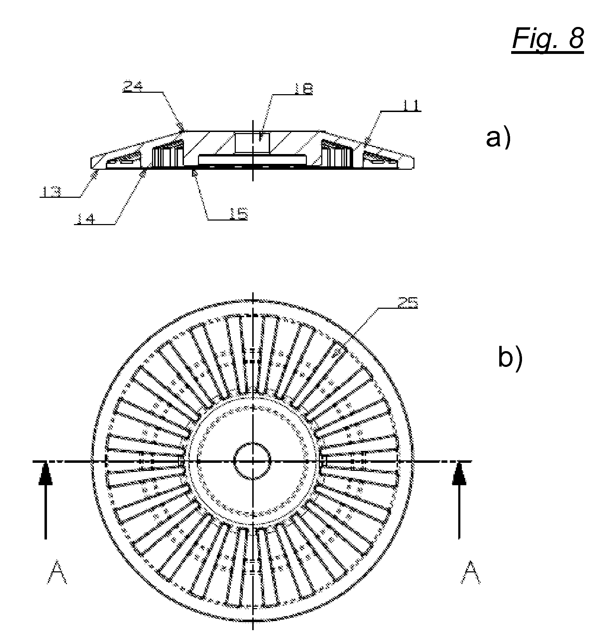

Die bevorzugte Ausführungsform des erfindungsgemäßen Befestigungselements nach der Draufsicht in Figur 8 weist in der Basisplatte zwischen der Bohrung 18 beziehungsweise der Schulter 24 und der äußeren Rippe 13 verlaufende Schlitze 25 auf. Diese Schlitze können eine über die Länge konstante Breite haben oder sich auch radial nach außen erweitern. Durch die Schlitze entstehen Lücken in den mittleren Rippen 14, die hier in der Draufsicht nicht sichtbar und daher gestrichelt dargestellt sind.

Figur 9 stellt eine ähnliche Befestigung für eine LED-Platine an einem Kühlkörper nach dem Stand der Technik mit Schraube 4 und Unterlegscheibe dar. Beim Anziehen der Schraube 4 im Gewinde der Bohrung 20 im Kühlkörper 2 wird auf die Unterlegscheibe 22 ein starker Druck ausgeübt. Dadurch biegen sich die Ränder der Unterlegscheibe 22 nach oben, die Platine 1 wird verformt und wirft sich in dem an die Unterlegscheibe 22 angrenzende Bereich auf, so dass ein Spalt 21 (hier zur Verdeutlichung überhöht) entsteht, in dem ein sehr hoher Wärmewiderstand vorliegt.

### Bezugszeichenliste

- 1: Platine
- 2: Kühlkörper
- 3: LED
- 4: Schraube
- 5: Kontaktfläche
- 6: Schraubenkopf
- 10: Befestigungselement
- 11: Basisplatte
- 12: Unterseite des Befestigungselements
- 13: äußere Rippe
- 14: mittlere Rippen
- 15: innere Rippe
- 16: Lücke in der Rippe
- 17: Oberseite der Basisplatte
- 18: Bohrung des Befestigungselements
- 19: Bohrung der Platine
- 20: Bohrung des Kühlkörpers
- 21: Spalt
- 22: Unterlegscheibe
- 24: Schulter
- 25: Schlitz

## Patentansprüche

1. Befestigungselement (10) zum flächigen Verbinden von plattenförmigen Bauteilen (1, 2) mittels mindestens eines die Bauteile senkrecht durchsetzenden Befestigungsmittels (4), insbesondere von LED-Platinen auf Kühlkörpern, umfassend
- eine Basisplatte (11) aus einem elastisch verformbaren Material
- mit zentraler Bohrung (18) zur Durchführung des Befestigungsmittels, das zusammenwirkend mit einem der plattenförmigen Bauteile (2) auf die Basisplatte (11) eine senkrecht gerichtete Kraft ausüben kann,
- durch welche die Basisplatte elastisch verformt werden und auf das andere plattenförmige Bauteil (1) Druck ausüben kann,
- wobei das Profil der Basisplatte so gestaltet ist, dass sich infolge der elastischen Verformung die zu dem anderen plattenförmigen Bauteil (1) weisende untere Fläche der Basisplatte zumindest teilweise an die Oberfläche dieses Bauteils anlegen und bei einer vorgegebenen Anzugskraft des Befestigungsmittels (4) einen gleichmäßig verteilten vorgegebenen Druck auf diese Fläche ausüben kann.

2. Befestigungselement nach Anspruch 1, **dadurch gekennzeichnet, dass** die Basisplatte kreisrund, quadratisch, rechteckig, sechseckig oder achteckig ist oder die Form eines anderen Vielecks hat.

3. Befestigungselement nach Anspruch 1 oder 2, **dadurch gekennzeichnet, dass** die untere Fläche der Basisplatte mit mindestens zwei hinsichtlich der Bohrung konzentrischen Rippen versehen ist.

4. Befestigungselement nach Anspruch 3, **dadurch gekennzeichnet, dass** eine oder mehrere der konzentrischen Rippen mit Unterbrechungen versehen sind.

5. Befestigungselement nach Anspruch 3 oder 4, **dadurch gekennzeichnet, dass** die Basisplatte im Bereich zwischen der äußeren und der inneren Rippe radial verlaufende Schlitze aufweist.

6. Befestigungselement nach einem der vorangehenden Ansprüche, **dadurch gekennzeichnet, dass** die Basisplatte eine an die Bohrung angrenzende Schulter aufweist.

7. Befestigungselement nach einem der vorangehenden Ansprüche, **dadurch gekennzeichnet, dass** es aus einem Kunststoff oder einem faserverstärkten Kunststoff gefertigt ist.

8. Befestigungselement nach Anspruch 7, **dadurch gekennzeichnet, dass** der Kunststoff Polyamid, Polyoxymethylen, Polyetherketone, Polyetherimide, Polycarbonat oder Polybutylenterephthalat und deren Modifikationen umfasst.

9. Befestigungselement nach einem der Ansprüche 1 bis 6, **dadurch gekennzeichnet, dass** es aus Metall gefertigt ist.

10. Befestigungselement nach Anspruch 9, **dadurch gekennzeichnet, dass** es eine elektrisch isolierende Beschichtung aufweist.

11. Verwendung des Befestigungselements nach einem der vorangehenden Ansprüche zur Befestigung einer LED-Platine an einem Kühlkörper.

12. LED-Anordnung mit einer Mehrzahl von LED auf einer Platine, die auf einem Kühlkörper befestigt ist, **dadurch gekennzeichnet, dass** sie Befestigungselemente nach einem der Ansprüche 1 bis 10 umfasst, die zwischen den LED auf der Platine aufliegend angeordnet und mit Schrauben, welche die Platine durchdringen, im Kühlkörper befestigt sind.
